# EUROPEAN PATENT SPECIFICATION

(11) **EP 3 504 472 B1**
(45) Date of publication and mention of the grant of the patent: **14.04.2021**
(21) Application number: 17797043.1
(22) Date of filing: 22.08.2017
(51) Int. Cl.: F16L 59/02, F16L 59/04

(54) **INSULATION PRODUCT AND METHOD FOR MANUFACTURE THEREOF**
ISOLIERPRODUKT UND VERFAHREN ZUR HERSTELLUNG DAVON
PRODUIT ISOLANT ET SON PROCÉDÉ DE FABRICATION

(30) Priority: 25.08.2016 BE 201605655
(43) Date of publication of application: 03.07.2019
(73) Proprietor: D&D Isoltechnics NV, 1601 Sint-Pieters-Leeuw (BE)
(72) Inventor: DESMET Yves, Gabriel, Marie-Louis, 1860 Meise (BE)
(74) Representative: D'Halleweyn, Nele Veerle Trees Gertrudis
(86) International application number: PCT/BE2017/000038
(87) International publication number: WO 2018/035582

(56) References cited:
- EP-A2- 0 181 778
- GB-A- 970 724
- US-A- 4 412 880
- US-A1- 2010 330 316

## Description

The invention relates to an insulation product for insulating a conduit, to a method for manufacturing an insulation product, to a method for insulating a conduit and to an assembly of at least one such insulation product and a conduit.

Different conduits have different dimensions. Insulation of such conduits furthermore requires different filling materials and a different thickness, depending on the desired insulating value. It must therefore be possible to provide insulation products with different coverings and with different filling materials. Known insulation products are typically prefabricated having the desired dimensions and the desired material by their manufacturer, and then stored and transported to their destination. Storage and transport have a not inconsiderable ecological impact. As a result, known insulation products have a considerable ecological impact.

GB970724 relates to a method for forming a reinforced thermal insulating unit, wherein a sheet of reinforcing materials comprising a resin impregnated glass cloth, is folded upon itself at predetermined spaced intervals to form a plurality of tubular containers extending from a base portion and wherein each of the tubular containers has at least one pair of adjacent longitudinally extending edges which are secured together in any suitable manner such as by stitching.

US4412880 discloses a method of making a hard multi-tubular structure which comprises; producing a flat hose fabric composed of a plurality of side-by-side abutting hoses, introducing uninflated foil tubes into each of the hoses of the fabric, the tubes being of substantially the same length as the length of the fabric, inflating the tubes for expanding the hoses into formed hollow sections, treating the fabric with a hardening material, and allowing a hardening of the hardening material and a setting of the fabric with the hoses in expanded condition. Therefollowing, the tubes are left after the setting of the hose fabric in the respective hollow sections free of any internal inflating pressure. Alternatively, the tubes may be withdrawn from the hollow sections after the setting.

An object of embodiments of the present invention is to limit the ecological impact of conduit insulation.

The invention provides for this purpose a method for manufacturing an insulation product for insulating a conduit according to claim 1. The method inter alia comprises: arranging an amorphous, insulating filling material against at least one film of a per se amorphous material; and manufacturing a row of enclosing channels in the at least one film. All this is here such that the filling material is enclosed in at least one enclosing channel of the row of enclosing channels and, when enclosed, the filling material takes on a form in accordance with the dimensions of the at least one enclosing channel in order to obtain at least one insulation tube in the at least one film.

In this way it is possible to make use of only the amount of amorphous material and/or only the amount of filling material found to be needed at the work-site. Material waste can thus be reduced, and an ecological saving is also achieved in the transport of the material which would thus otherwise have been wasted.

In this way it is moreover possible to make it more difficult for the filling material to move significantly in the interior of the insulation product, which in the longer term could result in certain parts of the insulation product performing less well. This is because the filling material, since it is enclosed in a row of a plurality of enclosing channels, cannot move freely, or can do so only to limited extent, for instance with a view to a good adjacency of materials. Use is in this way made of various types of filling material, even cumbersome filling material or filling material which is not very cohesive (having little cohesion), so that insulating materials which are less ecologically harmful can also be better utilized to insulate the conduit, which in turn helps limit the ecological impact.

In the context of the invention 'insulation' and 'insulate' can be understood to mean particularly thermal insulation, acoustic insulation or both thermal and acoustic insulation. In addition, 'conduit' can be understood to mean a pipe-like body for transport of all manner of substances, particularly fluids but also solid substances (such as flour, sugar, salt and other bulk materials). The conduit can be linear, but can also be a so-called fitting piece, i.e. a curved, thickened, narrowed and/or branched body. In this context the cross-section of a conduit can be substantially circular, but also elliptical or polygonal, or take yet another form.

According to a determined preferred embodiment, the filling material taking on a form comprises at least a form of the cross-section changing substantially because the or each relevant enclosing channel settles in an energy-efficient manner on the basis of the filling material which is enclosed. The skilled person will particularly appreciate that the filling material takes on a form in accordance with the dimensions of the enclosing channel to greater extent than that the enclosing channel itself takes on a form in accordance with the enclosed filling material - although it is of course possible to have a limited deformation of the enclosing channel in accordance with the enclosed filling material take place.

According to the invention, the arranging of the filling material comprises arranging a first quantity of filling material in at least one first enclosing channel of the row of enclosing channels, which at least one first enclosing channel is associated with a first zone of the conduit. The arranging of the filling material also comprises arranging a second quantity of filling material in at least one second enclosing channel of the row of enclosing channels, which at least one second enclosing channel is associated with a second zone of the conduit, which second zone lies at a different position than the first zone. The first quantity differs here from the second quantity in accordance with a difference between the surface area of respectively the first zone and the second zone.

According to another preferred embodiment, the at least one film comprises either the same film for a plurality, preferably all, enclosing channels of the row of enclosing channels, or comprises an individual piece of film for each enclosing channel of the row of enclosing channels.

According to a specific preferred embodiment, the or each enclosing channel of the row of enclosing channels comprises along its longitudinal direction an open end, and the method comprises closing the open end of the or each enclosing channel.

According to a particular preferred embodiment, the filling material is in bulk state, at least while being arranged. This means that it is in non-packaged state, for instance loose or having little cohesion.

According to another preferred embodiment, the method comprises measuring at least one dimension of the conduit for insulating; and calculating on the basis of the at least one measured dimension at least one dimension of the row of enclosing channels for manufacturing. The amorphous, insulating filling material is here arranged against the at least one film in accordance with the at least one calculated dimension; and the row of enclosing channels is manufactured in the at least one film in accordance with the at least one calculated dimension.

According to a further developed embodiment, the method moreover comprises entering the at least one measured dimension into a device for manufacturing an insulation product. Calculating of the at least one dimension of the row of enclosing channels comprises here calculating thereof on the basis of the at least one dimension entered into the device.

According to a preferred embodiment, the method comprises closing at least one and preferably both longitudinal outer ends of the at least one enclosing channel.

According to another preferred embodiment, arranging of the filling material comprises arranging at least one strip of filling material over at most a delimited portion of the length of the or each corresponding enclosing channel. The method moreover comprises closing the boundaries of the delimited portion.

According to a further developed embodiment, the closing comprises joining mutually opposite walls of the relevant enclosing channel.

According to a particular preferred embodiment, the manufacturing comprises arranging the row of enclosing channels substantially parallel to each other; and/or arranging the row of enclosing channels at regular intermediate distances.

According to a specific preferred embodiment, the manufacturing comprises: forming a first sub-row of enclosing channels and a second sub-row of enclosing channels with a form complementary thereto; and having the first sub-row of enclosing channels and the second sub-row of enclosing channels engage in each other alternatingly in order to obtain the row of enclosing channels. In this context 'alternatingly' can be understood to mean 'alternating from the one element to the other element', for instance in an 'ABABAB...' structure. In addition, in this context 'sub-row' can be understood to mean a part of a row, for instance a plurality of (not necessarily contiguous) elements of a row.

According to a preferred embodiment, the filling material has a lambda value of a maximum of 0.2 W/m.K, preferably a maximum of 0.1 W/m.K, more preferably a maximum of 0.05 W/m.K, most preferably a maximum of 0.025 W/m.K.

According to another preferred embodiment, the filling material comprises at least one of the following materials: perlite; aerogel; and discarded insulating material; and/or the filling material is made cohesive by means of sodium silicate.

According to a specific preferred embodiment, at least the side of the at least one film to be directed away from the conduit for insulating is manufactured from a material such that the insulation product is manufactured in at least one of the following classes in accordance with European standard EN 13501-1: European fire class B or less combustible; European smoke class s1; and European burning droplets class d0.

According to a preferred embodiment, the method comprises fixing a cover foil at a side of the at least one film to be directed away from the conduit for insulating. The cover foil is preferably manufactured here from a material such that the insulation product is manufactured in at least one of the following classes in accordance with European standard EN 13501-1: European fire class B or less combustible; European smoke class s1; and European burning droplets class d0.

According to a further developed preferred embodiment, the cover foil is fixed at the side of the row of enclosing channels to be directed away from the conduit for insulating by means of at least one of the following processes: adhering, hot-welding, stitching and/or stapling.

According to another further developed preferred embodiment, the cover foil is manufactured from a material chosen from the following: mineral wool; basalt fiber cloth; fibre-reinforced aluminium; and non-woven basalt.

According to yet another further developed preferred embodiment, the cover foil has a thickness of between 0.5 mm and 10 mm, preferably between 1 mm and 5 mm.

According to a preferred embodiment, the method comprises coupling a shoulder of at least one enclosing channel of the formed row of enclosing channels, as seen along the cross-section of this at least one enclosing channel, to its other shoulder, preferably by means of at least one of the following processes: adhering, hot-welding, stitching and/or stapling.

According to a specific preferred embodiment, the amorphous material is a thermoplastic material.

According to another preferred embodiment, the amorphous material is a polymer material, preferably polypropylene.

According to a particular preferred embodiment, the method comprises preventing the arranging of filling material in at least one enclosing channel of the formed row of enclosing channels, which at least one enclosing channel is suitable, as indicator channel, for indicating where the insulation product can be cut.

The invention also provides a method for insulating a conduit, which method comprises: manufacturing at least one insulation product according to any of the above described embodiments; and arranging the manufactured at least one insulation product on the conduit.

According to a preferred embodiment, the method comprises securing the arranged at least one insulation product by winding it at least once around an outer wall of the conduit for insulating and by closing its winding seam, preferably along its longitudinal direction.

The invention also provides an insulation product for insulating a conduit according to claim 10. The insulation product comprises at least one film of a per se amorphous material, in which at least one film a row of enclosing channels is manufactured. An amorphous, insulating filling material is here enclosed in at least one enclosing channel of the row of enclosing channels in a manner such that the enclosed filling material has taken on a form in accordance with the dimensions of the at least one enclosing channel, such that at least one insulation tube is formed in the at least one film.

According to the invention, the row of enclosing channels comprises at least one first enclosing channel which is associated with a first zone of the conduit, in which at least one first enclosing channel is arranged a first quantity of filling material. The row of enclosing channels comprises here at least one second enclosing channel which is associated with a second zone of the conduit, which second zone lies at a different position than the first zone, in which at least one second enclosing channel is arranged a second quantity of filling material. The first quantity differs here from the second quantity in accordance with a difference between the surface area of respectively the first zone and the second zone.

According to a particular preferred embodiment, the at least one film comprises either the same film for a plurality of, preferably all, enclosing channels of the row of enclosing channels, or comprises an individual piece of film for each enclosing channel of the row of enclosing channels.

According to specific embodiment, the or each enclosing channel of the row of enclosing channels comprises along its longitudinal direction a closable open end (i.e. an open end which can be closed).

According to another specific embodiment, at least one and preferably both longitudinal outer ends of the at least one enclosing channel are closed.

According to yet another specific embodiment, the at least one enclosing channel has at least one enclosing channel in which filling material is enclosed over at most a delimited portion of its length, and wherein the boundaries of the delimited portion are closed.

According to a further developed preferred embodiment, mutually opposite walls of the relevant enclosing channel are joined.

According to another preferred embodiment, the filling material is in bulk state.

According to a specific preferred embodiment, the row of enclosing channels is arranged substantially mutually parallel; and/or the row of enclosing channels is arranged at regular intermediate distances.

According to a particular preferred embodiment, the row of enclosing channels comprises a first sub-row of enclosing channels and a second sub-row of enclosing channels with a form complementary thereto. The first and the second sub-row of enclosing channels here engage in each other alternatingly.

According to a preferred embodiment, the filling material has a lambda value of a maximum of 0.2 W/m.K, preferably a maximum of 0.1 W/m.K, more preferably a maximum of 0.05 W/m.K, most preferably a maximum of 0.025 W/m.K.

According to a specific embodiment, the filling material comprises at least one of the following materials: perlite; aerogel; and discarded insulating material; and/or the filling material is made cohesive by means of sodium silicate.

According to another preferred embodiment, at least the side of the at least one film to be directed away from the conduit for insulating is manufactured from a material such that the insulation product is manufactured in at least one of the following classes in accordance with European standard EN 13501-1: European fire class B or less combustible; European smoke class s1; and European burning droplets class d0.

According to yet another preferred embodiment, the insulation product comprises a cover foil fixed at a side of the at least one film to be directed away from the conduit for insulating. The cover foil is preferably manufactured here from a material such that the insulation product is manufactured in at least one of the following classes in accordance with European standard EN 13501-1: European fire class B or less combustible; European smoke class s1; and European burning droplets class d0.

According to a further developed preferred embodiment, the cover foil is fixed at the side of the row of enclosing channels to be directed away from the conduit for insulating by means of at least one of the following processes: adhering, hot-welding, stitching and/or stapling.

According to another further developed preferred embodiment, the cover foil is manufactured from a material chosen from the following: mineral wool; basalt fiber cloth; fibre-reinforced aluminium; and non-woven basalt.

According to a specific preferred embodiment, the cover foil has a thickness of between 0.5 mm and 10 mm, preferably between 1 mm and 5 mm.

According to a particular preferred embodiment, a shoulder of at least one enclosing channel of the formed row of enclosing channels, as seen along the cross-section of this at least one enclosing channel, is coupled to its other shoulder, preferably by means of at least one of the following processes: adhering, hot-welding, stitching and/or stapling.

According to another preferred embodiment, the amorphous material is a thermoplastic material.

According to yet another preferred embodiment, the amorphous material is a polymer material, preferably polypropylene.

According to a specific preferred embodiment, the row of enclosing channels comprises at least one indicator channel in which essentially no filling material is enclosed.

The invention also provides an assembly of at least one insulation product according to any of the above described embodiments and a conduit for insulating, wherein the or each insulation product is arranged on the conduit for insulating.

According to a preferred embodiment, the or each arranged insulation product is wound at least once around an outer wall of the conduit for insulating. Its winding seam is here preferably closed along its longitudinal direction.

The above stated and other advantageous features and objects of the invention will become more apparent, and the invention better understood, on the basis of the following detailed description when read in combination with the accompanying drawing.

In the drawing:
Figure 1 is a cross-sectional view of a first embodiment of an insulation product according to the invention;
Figure 2 is a cross-sectional view of a second embodiment of an insulation product according to the invention;
Figure 3 is a cross-sectional view of a third embodiment of an insulation product according to the invention;
Figure 4 is a cross-sectional view of a fourth embodiment of an insulation product according to the invention;
Figure 5 is a cross-sectional view of a fifth embodiment of an insulation product according to the invention;
Figure 6 is a cross-sectional view of a sixth embodiment of an insulation product according to the invention;
Figure 7 is a cross-sectional view of a seventh embodiment of an insulation product according to the invention;
Figure 8 is a cross-sectional view of an eighth embodiment of an insulation product according to the invention;
Figure 9 is a perspective view of the first embodiment;
Figures 10A-10C are cross-sectional views of a conduit, insulated with an exemplary embodiment of the insulation product according to the invention, for instance such as the embodiments shown in any of the Figures 1-9;
Figure 11 is a schematic representation of a part of an embodiment of a method according to the invention for manufacturing an insulation product, for instance an insulation product as shown in any of the Figures 1-9;
Figures 12A-12B and 13A-13B are perspective views (of respectively the front side and the rear side) of a respective conduit for insulating with a fitting piece and said conduit, insulated with an exemplary embodiment of the insulation product according to the invention, for instance such as the embodiments shown in any of the Figures 1-9;
Figure 14 is a cross-sectional view of a preferred embodiment of an insulation product according to the invention;
Figure 15 is a cross-sectional view of another preferred embodiment of an insulation product according to the invention;
Figure 16 is a cross-sectional view of yet another preferred embodiment of an insulation product according to the invention;
Figure 17 is a cross-sectional view of yet another preferred embodiment of an insulation product according to the invention; and
Figure 18 is a cross-sectional view of yet another preferred embodiment of an insulation product according to the invention.

The same or similar elements are designated in the accompanying drawing with the same reference numerals throughout the figures.

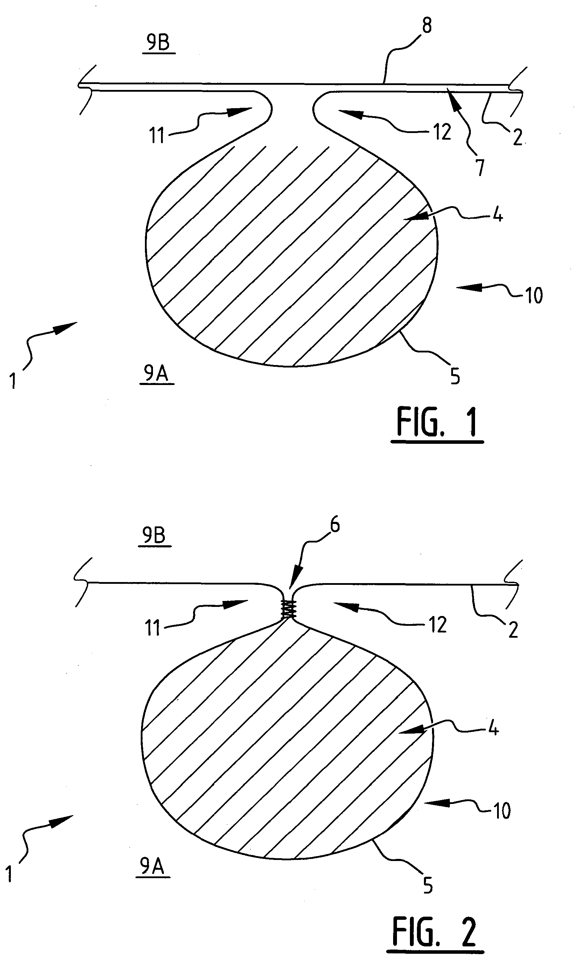

Figure 1 shows a cross-sectional view of a first embodiment of an insulation product 1 according to the invention. Insulation product 1 has a side 9A to be directed toward the conduit for insulating (not shown), so away from the surrounding area, and a side 9B to be directed away from the conduit for insulating, so toward the surrounding area. Insulation product 1 comprises a row of enclosing channels, a first enclosing channel 10 of which is shown in cross-section in this figure. The figure shows a flexible film 2 (i.e. a pliable, soft yet still strong film, for instance of polypropylene or another suitable plastic; such a film can be obtained by manufacturing it in situ in or close to the work-site where the conduit for insulating is situated, or by manufacturing it elsewhere and winding it onto a roll or a reel and then unwinding it in situ in or close to the work-site - an element is 'flexible' if it does not break or crack when it is deformed, particularly folded), preferably of a per se amorphous material, and a cover foil 8 (for instance a basalt fleece or a fibre-reinforced aluminium foil), which is attached to amorphous material 2 by means of an attachment 7 (for instance an adhesion or a hot weld, although stitching or staples or the like could for instance also be used). In the variant shown here the first enclosing channel 10 comprises a wall 5 manufactured from the film 2 of the amorphous material. The embodiment shown here shows shoulders 11 and 12, which designate in this example the transition between wall 5 of the actual channel and the rest of film 2. In the embodiment drawn here filling material 4 is enclosed in the first enclosing channel 10. Filling material 4 preferably has a lambda value of a maximum of 0.2 W/m.K, preferably a maximum of 0.1 W/m.K, more preferably a maximum of 0.05 W/m.K, most preferably a maximum of 0.025 W/m.K - filling material 4 can for instance be chosen from the following: perlite, aerogel and/or discarded insulating material. Filling material 4 is preferably chosen so that it was in bulk state at least during filling of enclosing channel 10, meaning that filling material 4 was then not form-retaining, and was for instance able to be dispensed or poured into first enclosing channel 10 in the form of loose particles or particles having little cohesion, wherein filling material 4 takes on a form in accordance with the dimensions of first enclosing channel 10. By filling first enclosing channel 10 with sufficient filling material 4, the cross-section of this first enclosing channel 10 takes on a slightly round form - in a theoretical idealization even spherically round - because the assembly of filling material 4 and enclosing channel 10 settles in an energy-efficient manner. By taking on this form in accordance with the dimensions of the first enclosing channel 10 an insulation tube (i.e. an at least approximately cylindrical insulating ridge) is obtained in film 2. In this embodiment it is advantageous for cover foil 8 to preferably be manufactured from a material such that insulation product 1 is manufactured in at least one of the following classes in accordance with the European standard EN 13501-1 known to the skilled person: European fire class B or less combustible; European smoke class s1; and European burning droplets class d0.

In an alternative embodiment it is possible that filling material 4 is arranged not directly against film 2, but with interposing of one or more other elements (not shown), such as for instance one or more intermediate material layers, for instance in order to improve the resistance to tearing, the form-retention and/or the heat resistance.

Figure 2 shows a cross-sectional view of a second embodiment of an insulation product 1 according to the invention. The second embodiment corresponds to the first embodiment shown in Figure 1, but without the cover foil 8 and attachment 7 shown there. Instead, the at least one film 2 is coupled at the position of shoulders 11 and 12 of first enclosing channel 10 by means of attachment 6, which can comprise for instance for instance stitching, sewing yarn, staples or the like (but could for instance also comprise adhesive or a heat weld or the like), so as to thus manufacture the enclosing channel 10 solely from the at least one film 2. In this second embodiment it is advantageous to embody particularly the side 9B of insulation product 1 to be directed toward the surrounding area in a material or with a finish such that insulation product 1 is manufactured in at least one of the following classes in accordance with the European standard EN 13501-1 known to the skilled person: European fire class B or less combustible; European smoke class s1; and European burning droplets class d0.

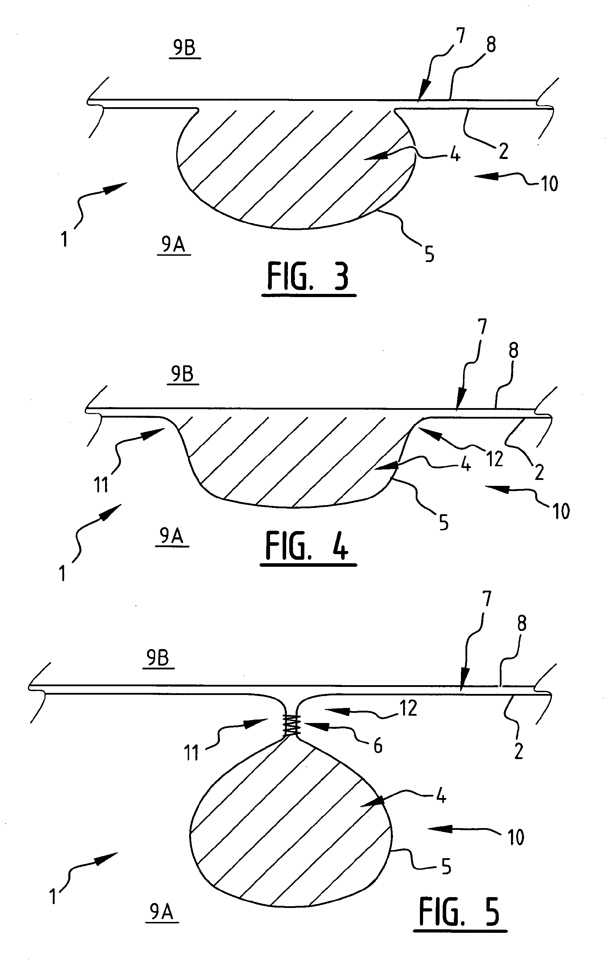

Figure 3 shows a cross-sectional view of a third embodiment of an insulation product 1 according to the invention. This third embodiment corresponds to the first embodiment shown in Figure 1, with the understanding that the distance between shoulders 11 and 12 of first enclosing channel 10 takes a relatively greater form in this third embodiment, so that the cross-section of first enclosing channel 10 is here more lens-shaped than spherical as in Figure 1, although it will nevertheless be understood that the enclosing channel 10 in which the filling material 4 is thus enclosed can for this embodiment also be referred to as an insulation tube.

Figure 4 shows a cross-sectional view of a fourth embodiment of an insulation product 1 according to the invention. This fourth embodiment corresponds to the third embodiment of Figure 3, with the understanding that in this fourth embodiment the film 2 is formed such that the cross-section of the first enclosing channel 10 is more rounded and polygonal, here rectangular, than lens-shaped, as in Figure 3. This is for instance possible by making use of filling material 4 with more compression strength.

Figure 5 shows a cross-sectional view of a fifth embodiment of an insulation product 1 according to the invention. This fifth embodiment comprises both an attachment 7 between film 2 and cover foil 8, as in Figure 1, and attachment 6, as in Figure 2, to couple shoulders 11 and 12. This fifth embodiment otherwise corresponds to the first embodiment shown in Figure 1.

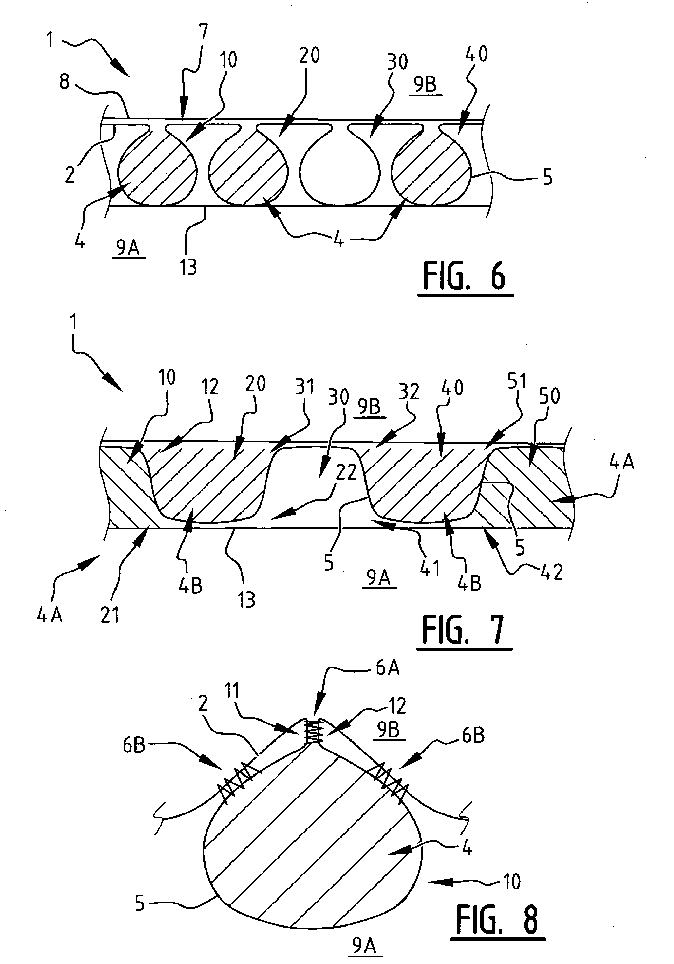

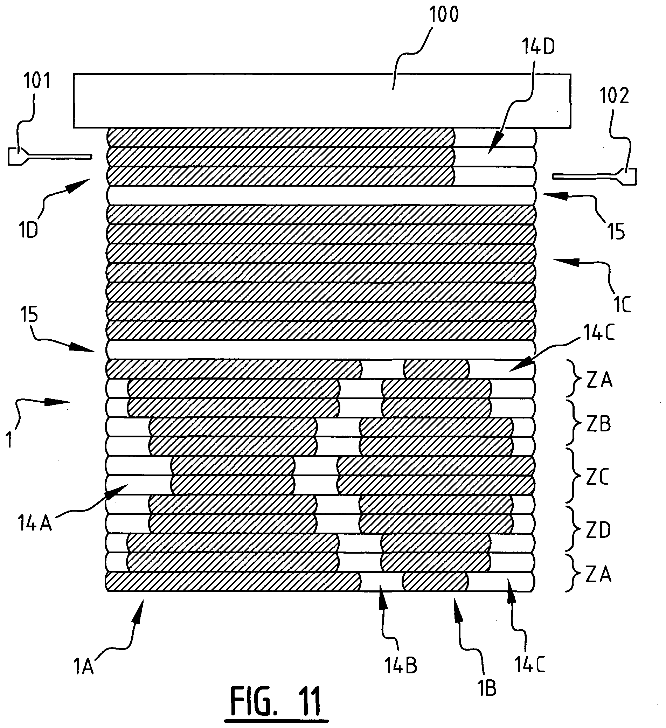

Figure 6 shows a cross-sectional view of a sixth embodiment of an insulation product 1 according to the invention. This figure shows a plurality of enclosing channels 10-40 of the row of enclosing channels, wherein it becomes apparent (by respective hatching and non-hatching of the cross-section) whether an enclosing channel is respectively filled or conversely not filled with filling material 4. In this embodiment enclosing channels 10, 20 and 40 are filled with filling material, and enclosing channel 30 is prevented from being filled with filling material so that enclosing channel 30 is empty (i.e. without or almost without filling material). Enclosing channel 30 can in this way for instance be used as indicator channel, as will be further described below with reference to Figure 11. In this sixth embodiment an optional cover layer 13 is also coupled on the side 9A of insulation product 1 to be directed toward the conduit for insulating, for instance in order to better hold the row of enclosing channels in place and/or in order to make insulation product 1 easier to handle. Moreover formed in each case between the enclosing channels 10-40 of the row of enclosing channels is an intermediate space, which can for instance be emptied, in order to allow the enclosing channels space to settle in efficient manner around a conduit for insulating (not shown). Air pockets can thus moreover result, in which gas, such as air, is contained between the enclosing channels (and amorphous material 2 and cover layer 13), which air pockets can contribute to the insulation of the conduit. This advantage can also apply to other embodiments described above or below.

Figure 7 shows a cross-sectional view of a seventh embodiment of an insulation product 1 according to the invention. This seventh embodiment corresponds to the sixth embodiment shown in Figure 6, with the understanding that the row of enclosing channels comprises a first sub-row of enclosing channels 10, 30, 50 and a second sub-row of enclosing channels 20, 40 with a form complementary thereto. As shown, the first sub-row of enclosing channels 10, 30, 50 and the second sub-row of enclosing channels 20, 40 engage in each other alternatingly herein. "Alternatingly" can be understood here to mean "alternating from the one to the other, for instance just as a series of tongue and groove connections". In the embodiment shown here a cover foil 8 can be fixed on the upper side 9B of insulation product 1 (i.e. the side to be directed away from the conduit for insulating), just as for the embodiment of Figure 4. A cover layer 13, similar to cover foil 8, can be fixed on the underside 9A of the insulation product (i.e. the side to be directed toward the conduit for insulating). An additional difference of this seventh embodiment relative to the sixth embodiment shown in Figure 6 is that it has optionally been chosen here to use different filling materials 4A and 4B for filling respectively the first and the second row of enclosing channels - this is shown in the figure by the use of hatching at different angles. Alternatively, the same filling material can of course be used.

Figure 8 shows a cross-sectional view of an eighth embodiment of an insulation product 1 according to the invention. This eighth embodiment corresponds to the second embodiment shown in Figure 2, with the understanding that, in addition to attachment 6A (for instance similar to attachment 6 of Figure 2), it has here also been chosen to additionally fix the rest of film 2 to wall 5 (which is formed from the remaining shown part of film 2) by means of attachment 6B, which can comprise for instance stitching, staples, yarn or the like (although attachment by means of adhesion or hot-welding or the like could for instance also be opted for here). A more compact form for insulation product 1 is thus achieved.

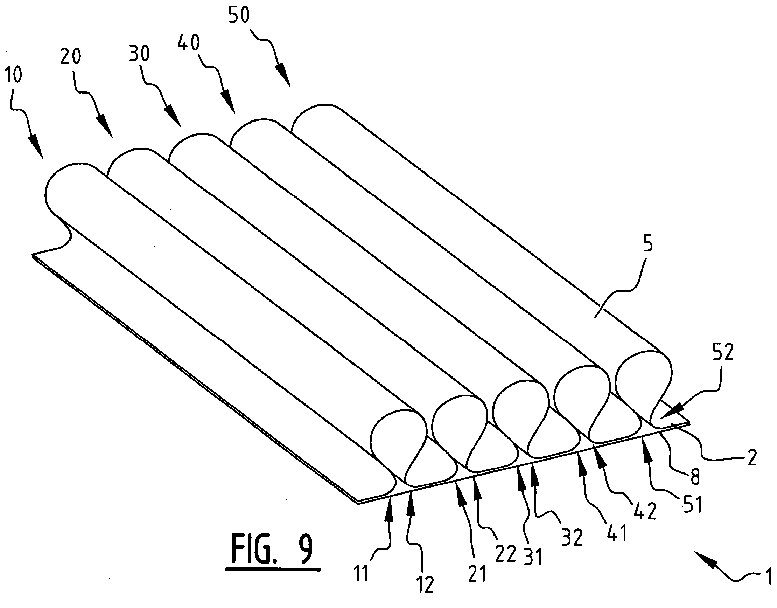

Figure 9 shows a perspective view of the first embodiment, as shown in Figure 1. Also visible in this figure are several other enclosing channels of the row of enclosing channels, particularly enclosing channels 20-50, and the shoulders 21-22, 31-32, 41-42 and 51-52 in film 2, where film 2 in each case transitions between the respective walls 5. In this figure the side 9A to be directed toward the conduit for insulating is more easily visible. In the shown embodiment it can be seen that the row of enclosing channels is formed at (at least essentially) regular intermediate distances, and moreover mutually parallel.

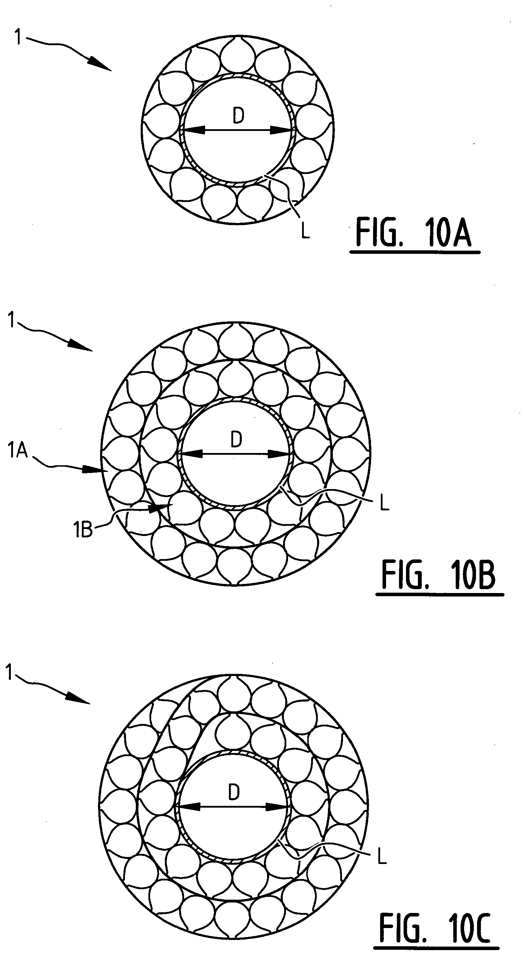

Figures 10A-10C show cross-sectional views of a conduit L which is insulated with an exemplary embodiment of the insulation product 1 according to the invention, for instance such as the embodiments shown in any of the Figures 1-9, by arranging this insulation product 1 against conduit L. It can be seen in all three figures how the dimensions of insulation product 1 can depend on the dimensions of conduit L. At least one dimension of the conduit for insulating is preferably measured for this purpose, and at least one dimension of the row of enclosing channels is calculated on the basis of the at least one measured dimension. In this example the inner periphery of placed insulation product 1 (i.e. the periphery of insulation product 1 where it touches the conduit L around which it is placed) depends in each case on the periphery of the conduit L, and thus mathematically also on the diameter D of the conduit L. In order to achieve that at least one layer of insulation product 1 can be wound around the conduit L (for instance in order to prevent the creation of cold bridges) a whole number of multiples of this periphery can preferably be opted for for the inner periphery of placed insulation product 1, for instance once as in Figure 10A or twice as in Figures 10B and 10C. In the embodiment shown in Figure 10B the two layers of insulation product 1 are placed on each other as discrete layers 1A and 1B, while the layers in the embodiment shown in Figure 10C are formed by winding insulation product 1 as a spiral. In the variants of figures 10B and 10C the winding seam created thereby (i.e. the seam along the length of conduit L, where the layers of the wound insulation product meet) can preferably be closed, preferably along the longitudinal direction. This is for instance possible in that the winding seam is stapled along the longitudinal direction, or for instance in that a metal wire is wound round the insulation product and is tied up, or for instance in that an adhesive tape is arranged over the winding seam.

Figure 11 shows a schematic view of a part of an embodiment of a method according to the invention for manufacturing an insulation product 1, for instance an insulation product as shown in any of the Figures 1-9. The figure shows particularly the manufacture of four insulation products 1A, 1B, 1C and 1D for four (parts of) conduits, (here) each with different dimensions, by means of a device 100 for manufacturing such an insulation product. The embodiment shown here of the method for manufacturing the insulation products optionally comprises measuring at least one dimension of the conduit for insulating, preferably the outer periphery, the outer diameter and/or a dimension equivalent thereto, after which at least one dimension of the row of enclosing channels for manufacturing is calculated on the basis of the at least one measured dimension. This calculation can for instance produce as a result, among other things, a pitch distance for the row of enclosing channels, a pattern of enclosing channels or the like. This calculation can preferably indicate that a minimum of 4 enclosing channels, preferably 6 enclosing channels, more preferably a minimum of 12 enclosing channels, most preferably a minimum of 18 enclosing channels are required, for instance proportional to the outer periphery of the conduit for insulating, and for instance set the pitch distance between the individual enclosing channels in accordance therewith. The enclosing channels in this way take a sufficiently small form to prevent much movement of filling material 4 in the relevant insulation product. An amorphous material, preferably at least one flexible film, for instance a polymer film, is then unwound by device 100 and the row of enclosing channels is manufactured therein, preferably in accordance with the at least one calculated dimension. At least one enclosing channel of the formed row of enclosing channels is then at least partially filled with an insulating filling material, for instance by means of filling tubes 101 and 102 which can fill through both inlets of the enclosing channels such that at least one insulation tube is obtained. The filling material can alternatively be arranged as at least one strip of filling material, preferably in accordance with the at least one calculated dimension. The figure particularly shows that in the third insulation product 1C the whole manufactured length of the row of enclosing channels is filled with filling material, wherein the outer ends of the relevant enclosing channels are closed (i.e. shut), for instance by stapling, adhering, hot-welding or stitching them shut. In the fourth insulation product 1D the manufactured length of the row of enclosing channels is not wholly filled, but is filled only partially by arranging the filling material over at most a delimited portion of the length of the respective enclosing channels so that an empty space 14D remains, for instance because (a part of) a conduit has a length shorter than the whole manufactured length of the row of enclosing channels. The separation between insulation product 1D and empty space 14D can for instance be ensured by closing the boundaries of the delimited portion in which the row of enclosing channels of insulation product 1D is filled, for instance by stapling, adhering, hot-welding or stitching them shut. An empty indicator channel (i.e. enclosing channel not filled with filling material, or hardly so) can be provided between the different insulation products 1A-1D, or a plurality of adjoining such empty indicator channels, along which a worker can easily cut the film on the work-site in order to separate the different insulation products 1A-1D from each other without having to waste too much material. The first and second insulation product 1A and 1B serve to insulate fitting pieces (i.e. bends or other curved parts the length of which has a certain curvature, narrowed portions and/or thickened portions, T-pieces and so on) of a conduit (for which purpose empty spaces 14A and 14C have been left) and are partially filled in complementary manner using the same row of enclosing channels, wherein material waste is limited, by providing an intermediate space 14B between the two.

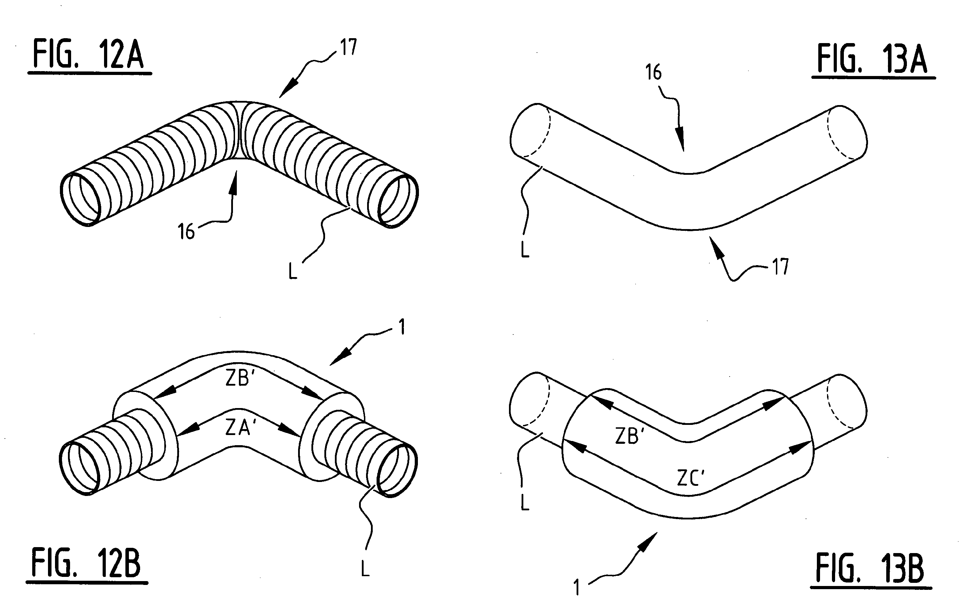

In the first and second insulation product 1A and 1B the fitting piece of the conduit for insulating has been taken into consideration in the partial filling, such that a different quantity of filling material is arranged in different enclosing channels of the row of enclosing channels associated with different zones, lying at different positions, of the conduit for insulating, in accordance with a difference between the surface areas of these respective different zones. This will be further described hereinbelow on the basis of insulation product 1B, with reference to Figures 12A-12B and 13A-13B. Determined enclosing channels are for this purpose only partially filled (i.e. only over a delimited portion of their length), in accordance with their intended position more on the inner side or on the outer side of the fitting piece, as will be elucidated with reference to Figures 12A-12B and 13A-13B. Designated in particular here for the second insulation product 1B are zone ZA with a limited degree of filling (this meaning in this embodiment: over a relatively shorter length), zones ZB and ZD with a moderate degree of filling and zone ZC with a relatively high degree of filling (this meaning in this embodiment: over a relatively longer length), which loop around in the sense that zone ZA is adjacent to both zone ZB and zone ZD when the insulation product is wound around the conduit. In addition to or instead of filling over a relatively shorter or relatively longer length of the enclosing channel, in an alternative embodiment a filling over an equal length of the enclosing channel can be opted for, but with a relatively larger or relatively smaller amount of filling material. This can be particularly useful for fitting pieces comprising a narrowed portion and/or a thickened portion.

Figures 12A-12B and 13A-13B show perspective views (of respectively the front side and the rear side) of a respective conduit L for insulating with a fitting piece (in this case a bend, i.e. a curved part of the conduit L) and said conduit L, insulated with an exemplary embodiment of the insulation product according to the invention, for instance such as the embodiments shown in any of the Figures 1-9. The two shown conduits L have a shorter inner side 16 of the fitting piece and a longer outer side 17 of the fitting piece, in accordance with the curvature of the bend. When an embodiment of an insulation product according to the invention, particularly the second insulation product 1B of Figure 11, is wound round this part of the conduit L, zone ZA can be allocated to this shorter inner side 16 as zone ZA' and zone ZC can be allocated to this longer outer side 17 as zone ZC'. Zone ZB can for instance be allocated to a part between inner side 16 and outer side 17 as zone ZB' and, similarly, zone ZD to the opposite side thereof as zone ZD' (not visible in the figure). In other words, a first, relatively larger, quantity of filling material can be arranged in the enclosing channels associated with zone ZC', while a second, relatively smaller, quantity of filling material can be arranged in the enclosing channels associated with zone ZA', which lies somewhere else (on conduit L) than zone ZC'. This takes place such that the first, relatively greater, quantity differs from the second, relatively smaller, quantity in accordance with a difference between the surface area of respectively the first zone and the second zone. This is because the enclosing channels of the second insulation product 1B which are filled over a relatively longer length (and are thus filled more) are provided for zone ZC' on the longer outer side 17 of the bend, while enclosing channels of the second insulation product 1B which are filled over a relatively shorter length (and are thus filled less) are provided for zone ZA' on the shorter inner side 16 of the bend. For zone ZB' and zone ZD' a quantity lying between the first and the second quantity can for instance be arranged in the enclosing channels associated with zones ZB and ZD.

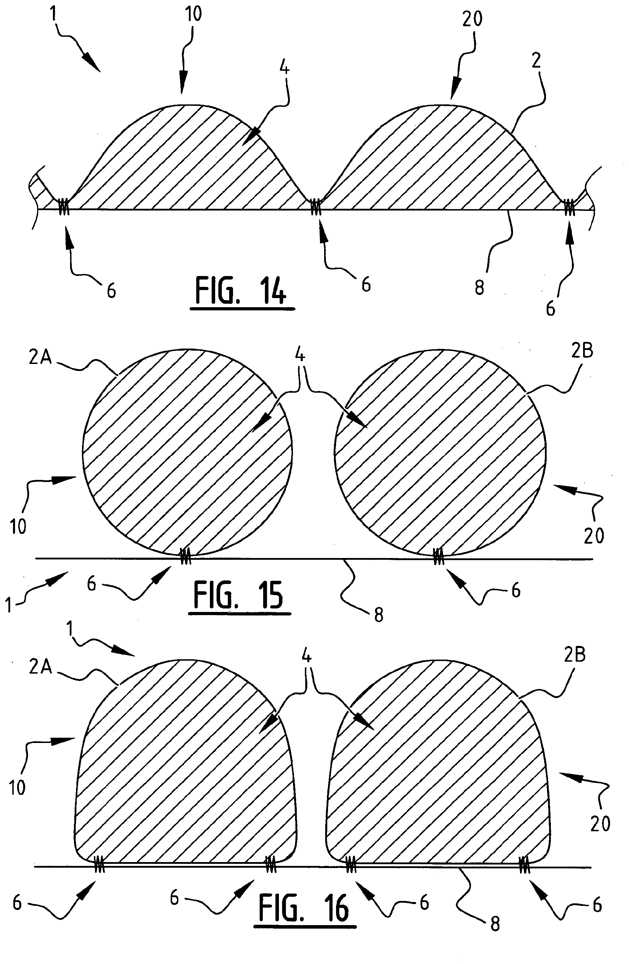

Figure 14 shows a cross-sectional view of a preferred embodiment of an insulation product 1 according to the invention. This preferred embodiment can be manufactured by arranging (for instance spreading) amorphous filling material 4 on a cover foil 8, for instance a similar cover foil as already described above, preferably mutually parallel and at regular intermediate distances. This filling material 4 is preferably arranged (or the row of enclosing channels 10, 20 is manufactured) in accordance with at least one dimension calculated on the basis of at least one measured dimension of the conduit for insulating. A film 2, for instance a film similar to the one already described above, can then be provided against filling material 4. The skilled person will understand that this represents the mechanical reversal of the above described steps of arranging the filling material against the film. A row of enclosing channels 10, 20 can then be manufactured in film 2, for instance by delimiting the row of enclosing channels 10, 20 individually. Enclosing channels 10, 20 can be delimited from each other by means of an attachment 6, for instance stitching, adhesion, a hot weld or staples. Enclosing channels 10, 20 are manufactured in this way. Insulating filling material 4 can be enclosed in enclosing channels 10, 20. Manufacturing enclosing channels 10, 20 in this way enables filling material 4 to take on a form in accordance with (i.e. be forced into the form of) the dimensions of the thus formed enclosing channels 10, 20. Because filling material 14 is amorphous and is preferably in bulk state, at least during the arranging and manufacturing, film 2 and filling material 4 can settle in an energy-efficient manner relative to each other in order to obtain at least one insulation tube in film 2.

Figure 15 shows a cross-sectional view of another preferred embodiment of an insulation product 1 according to the invention. This other preferred embodiment comprises a row of enclosing channels 10, 20 which are manufactured seperately of each other. This means that each enclosing channel 10, 20 is manufactured separately from an individual piece of film, respectively 2A and 2B, against which separate filling material 4 is arranged (for instance by separately filling each individual piece of film 2A and 2B with filling material 4 and then joining each of them individually). The thus manufactured enclosing channels 10, 20 can then be attached to a cover foil 8 so as to couple them next to each other, preferably mutually parallel and at regular intermediate distances. In the exemplary embodiment shown here attachment 6 can be stitching, adhesion, a hot weld, a staple or the like, arranged at one relatively narrow contact point between the respective enclosing channel 10, 20 and cover foil 8. Prefabricated enclosing channels can in this way be coupled quickly and easily in order to manufacture the insulation product.

Figure 16 shows a cross-sectional view of yet another preferred embodiment of an insulation product 1 according to the invention. This preferred embodiment corresponds to the embodiment shown in Figure 15, with the difference that the attachment 6 is arranged at two relatively narrow contact points instead of at only one. The contact surface area between the two thus increases, whereby enclosing channels 10, 20 will be anchored more firmly in insulation product 1.

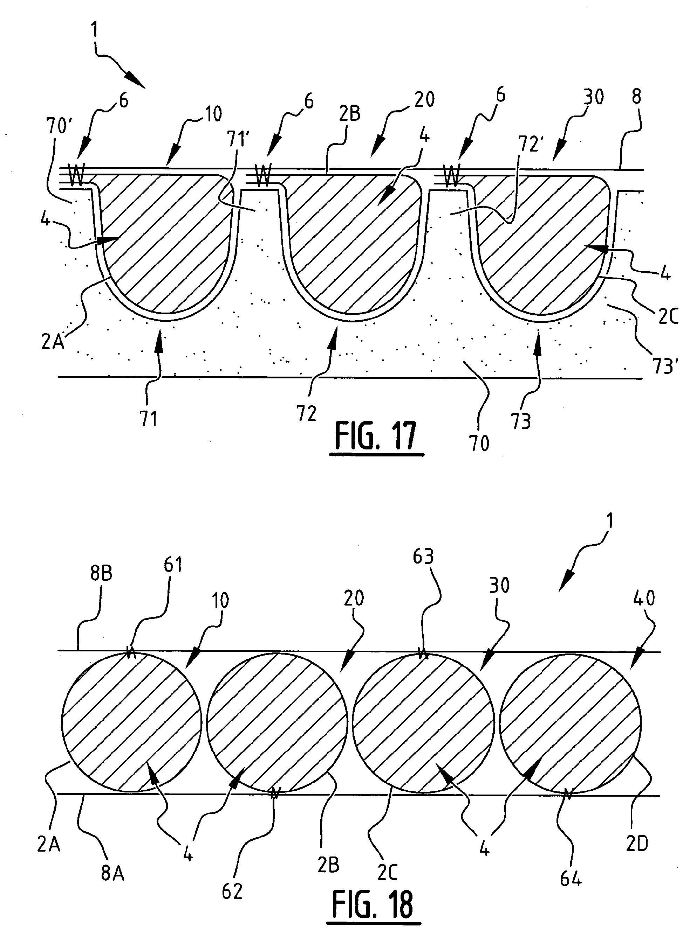

Figure 17 shows a cross-sectional view of yet another preferred embodiment of an insulation product 1 according to the invention. The figure also shows a step of a possible embodiment of a method according to the invention for manufacturing an insulation product 1. The figure shows a mould 70 (in cross-section) in which one or preferably a plurality of recesses 71, 72, 73 are provided. The recesses 71-73 can for instance be approximately semi-cylindrical over their length (transversely of the plane of the figure). Partitions 70', 71', 72', 73' which separate recesses 71-73 from each other can be provided between recesses 71-73. The tops of partitions 70'-73' are preferably substantially flat.

According to the embodiment of the method, in mould 70 individual pieces of film 2A, 2B, 2C of a per se amorphous material are each placed in a respective recess 71-73 so that they cover the inner wall of the corresponding recess, preferably at least from the one adjoining partition to the other adjoining partition. In this sense it can be stated that a row of enclosing channels 10, 20, 30 is manufactured in the individual pieces of film 2A-2C. Insulating filling material 4 is then preferably arranged against each individual piece of film 2A-2C. In an alternative embodiment at least one indicator channel can optionally be left as described above. A length of each respective individual piece of film 2A-2C which has been left can then be folded back over the arranged filling material 4 so as to thus enclose the filling material 4 in each respective enclosing channel 10-30. In this sense it can be stated that at least one insulation tube (three are shown in the figure) is obtained. The outer ends of the respective folded-back lengths of each individual piece of film 2A-2C are preferably attached on the one hand to the respective other outer ends of this individual piece of film 2A-2C in question and on the other hand to a cover foil 8 by means of attachments 6, such as staples, stitches, hot-welding or adhesion. The attaching preferably takes place at the position of the tops of the partitions 70'-73' of mould 70, which can preferably be substantially flat particularly for this purpose in order to facilitate the attaching.

According to the invention, it is thus possible to manufacture an insulation product for insulating a conduit in particularly simple manner.

Figure 18 shows a cross-sectional view of yet another preferred embodiment of an insulation product 1 according to the invention. This preferred embodiment corresponds to the embodiment shown in Figure 15, with the difference that more intermediate space is left between the two successive enclosing channels 10 and 20 of Figure 15 (corresponding to enclosing channels 20 and 40 of Figure 18), and that this intermediate space is filled by placing therein the enclosing channels 10 and 30 of an identical insulation product which has however been rotated through 180°, such that the enclosing channels 20, 40 of the one insulation product engage alternatingly as first sub-row 20, 40 in the enclosing channels 10, 30 of the other insulation product as second sub-row 10, 30 so as to thus form an assembled insulation product 1. For the sake of clarity the attachments are designated with reference numerals 61 for enclosing channel 10, 62 for enclosing channel 20, 63 for enclosing channel 30 and 64 for enclosing channel 40, and the cover foil 8A of the one insulation product is designated with reference numeral 8A and that of the other insulation product with reference numeral 8B. In practical use one of the two cover foils 8A and 8B - for instance cover foil 8A - can be situated on the side directed away from the conduit for insulating, and the other - for instance cover foil 8B - can be situated on the side directed toward the conduit for insulating.

The skilled person will appreciate that the invention is not limited to the above described exemplary embodiments, and that many variants can be envisaged within the scope of the invention, which is defined solely by the following claims.

## Claims

1. Method for manufacturing an insulation product (1) for insulating a conduit, which method comprises:
- arranging amorphous, insulating filling material (4) against at least one film (2) of a per se amorphous material (2); and
- manufacturing a row of enclosing channels (20; 40) in the at least one film;
all this such that the filling material is enclosed in at least one enclosing channel (10) of the row of enclosing channels and, when enclosed, the filling material takes on a form in accordance with the dimensions of the at least one enclosing channel in order to obtain at least one insulation tube in the at least one film; **characterized in that** the arranging of the filling material (4) comprises:
- arranging a first quantity of filling material in at least one first enclosing channel of the row of enclosing channels, which at least one first enclosing channel is associated with a first zone of the conduit;
- arranging a second quantity of filling material in at least one second enclosing channel of the row of enclosing channels, which at least one second enclosing channel is associated with a second zone of the conduit, which second zone lies at a different position than the first zone;
wherein the first quantity differs from the second quantity in accordance with a difference between the surface area of respectively the first zone and the second zone.

2. Method according to claim 1, wherein the at least one film comprises either the same film for a plurality of, preferably all, enclosing channels of the row of enclosing channels, or comprises an individual piece of film for each enclosing channel of the row of enclosing channels.

3. Method according to any of the foregoing claims, wherein the or each enclosing channel of the row of enclosing channels comprises along its longitudinal direction an open end, and wherein the method comprises closing the open end of the or each enclosing channel.

4. Method according to any of the foregoing claims, comprising:
- closing at least one and preferably both longitudinal outer ends of the at least one enclosing channel.

5. Method according to any of the foregoing claims,
wherein arranging of the filling material comprises arranging at least one strip of filling material over at most a delimited portion of the length of the or each corresponding enclosing channel; and wherein the method moreover comprises closing the boundaries of the delimited portion.

6. Method according to any of the claims 3-5, wherein the closing comprises joining mutually opposite walls (5) of the relevant enclosing channel.

7. Method according to any of the foregoing claims, wherein the filling material is in bulk state, at least while being arranged; and/or.
wherein the method comprises:
- measuring at least one dimension of the conduit for insulating; and
- calculating on the basis of the at least one measured dimension at least one dimension of the row of enclosing channels for manufacturing; and
wherein the amorphous, insulating filling material is arranged against the at least one film in accordance with the at least one calculated dimension; and
wherein the row of enclosing channels is manufactured in the at least one film in accordance with the at least one calculated dimension; and/or
wherein the manufacturing comprises:
- forming a first sub-row of enclosing channels and a second sub-row of enclosing channels with a form complementary thereto; and
- having the first sub-row of enclosing channels and the second sub-row of enclosing channels engage in each other alternatingly in order to obtain the row of enclosing channels; and/or wherein the filling material has a lambda value of a maximum of 0.2 W/m.K, preferably a maximum of 0.1 W/m.K, more preferably a maximum of 0.05 W/m.K, most preferably a maximum of 0.025 W/m.K; and/or
wherein the filling material comprises at least one of the following materials: perlite; aerogel; and discarded insulating material; and/or wherein the filling material is made cohesive by means of sodium silicate, and/or
wherein at least the side of the at least one film to be directed away from the conduit for insulating is manufactured from a material such that the insulation product is manufactured in at least one of the following classes in accordance with European standard EN 13501-1: European fire class B or less combustible; European smoke class s1; and European burning droplets class d0; and/or wherein the method comprises:
- fixing a cover foil (8) at a side of the at least one film to be directed away from the conduit for insulating; and
wherein the cover foil (8) is preferably manufactured from a material such that the insulation product is manufactured in at least one of the following classes in accordance with European standard EN 13501-1: European fire class B or less combustible; European smoke class s1; and European burning droplets class d0; and/or
wherein the cover foil is fixed at the side of the row of enclosing channels to be directed away from the conduit for insulating by means of at least one of the following processes: adhering, hot-welding, stitching and/or stapling; and/or
wherein the cover foil is manufactured from a material chosen from the following: mineral wool; basalt fiber cloth; fibre-reinforced aluminium; and non-woven basalt; and/or
wherein the amorphous material is a thermoplastic material; and/ or
wherein the amorphous material is a polymer material, preferably polypropylene; and/or
wherein the method comprises:
- preventing the arranging of filling material in at least one enclosing channel of the formed row of enclosing channels, which at least one enclosing channel is suitable as indicator channel for indicating where the insulation product can be cut.

8. Method for insulating a conduit, comprising:
- manufacturing at least one insulation product according to the method of any of the foregoing claims; and
- arranging the manufactured at least one insulation product on the conduit.

9. Method according to claim 8, comprising:
- securing the arranged at least one insulation product by winding it at least once around an outer wall of the conduit for insulating and by closing its winding seam, preferably along its longitudinal direction.

10. Insulation product (1) for insulating a conduit, wherein the insulation product comprises at least one film (2) of a per se amorphous material, in which at least one film a row of enclosing channels(20; 40) is manufactured, wherein an amorphous, insulating filling material (4) is enclosed in at least one enclosing channel of the row of enclosing channels in a manner such that the enclosed filling material has taken on a form in accordance with the dimensions of the at least one enclosing channel, such that at least one insulation tube is formed in the at least one film; **characterized in that** the row of enclosing channels comprises at least one first enclosing channel which is associated with a first zone of the conduit, in which at least one first enclosing channel is arranged a first quantity of filling material;
wherein the row of enclosing channels comprises at least one second enclosing channel which is associated with a second zone of the conduit, which second zone lies at a different position than the first zone, in which at least one second enclosing channel is arranged a second quantity of filling material;
wherein the first quantity differs from the second quantity in accordance with a difference between the surface area of respectively the first zone and the second zone.

11. Insulation product according to claim 10, wherein the at least one film comprises either the same film for a plurality of, preferably all, enclosing channels of the row of enclosing channels, or comprises an individual piece of film for each enclosing channel of the row of enclosing channels.

12. Insulation product according to any of the claims 10-11, wherein the or each enclosing channel of the row of enclosing channels comprises along its longitudinal direction a closable open end.

13. Insulation product according to any of the claims 10-12, wherein at least one and preferably both longitudinal outer ends of the at least one enclosing channel are closed.

14. Insulation product according to any of the claims 10-13, wherein the at least one enclosing channel has at least one enclosing channel in which filling material is enclosed over at most a delimited portion of its length, and wherein the boundaries of the delimited portion are closed

15. Insulation product according to any of the claims 10-14, wherein mutually opposite walls of the relevant enclosing channel are joined; and/or
wherein the filling material is in bulk state; and/or
wherein the row of enclosing channels comprises a first sub-row of enclosing channels and a second sub-row of enclosing channels with a form complementary thereto, wherein the first and the second sub-row of enclosing channels engage in each other alternatingly; and/or
wherein the filling material has a lambda value of a maximum of 0.2 W/m.K, preferably a maximum of 0.1 W/m.K, more preferably a maximum of 0.05 W/m.K, most preferably a maximum of 0.025 W/m.K; and/or
wherein the filling material comprises at least one of the following materials: perlite; aerogel; and discarded insulating material; and/or
wherein the filling material is made cohesive by means of sodium silicate; and/or
wherein at least the side of the at least one film to be directed away from the conduit for insulating is manufactured from a material such that the insulation product is manufactured in at least one of the following classes in accordance with European standard EN 13501-1: European fire class B or less combustible; European smoke class s1; and European burning droplets class d0; and/or
wherein the insulating product comprises a cover foil (8) fixed at a side of the at least one film to be directed away from the conduit for insulating; wherein the cover foil is preferably manufactured from a material such that the insulation product is manufactured in at least one of the following classes in accordance with European standard EN 13501-1: European fire class B or less combustible; European smoke class s1; and European burning droplets class d0; and/or
wherein the cover foil is fixed at the side of the row of enclosing channels to be directed away from the conduit for insulating by means of at least one of the following processes: adhering, hot-welding, stitching and/or stapling; and/or
wherein the cover foil is manufactured from a material chosen from the following: mineral wool; basalt fiber cloth; fibre-reinforced aluminium; and non-woven basalt; and/or
wherein the amorphous material is a thermoplastic material; and/or,
wherein the amorphous material is a polymer material, preferably polypropylene; and/or
wherein the row of enclosing channels comprises at least one indicator channel in which essentially no filling material is enclosed.

16. Assembly of at least one insulation product according to any of the claims 10-15 and a conduit for insulating, wherein the or each insulation product is arranged on the conduit for insulating; wherein preferably the or each arranged insulation product is wound at least once around an outer wall of the conduit for insulating, and wherein its winding seam is preferably closed along its longitudinal direction.

## Patentansprüche

1. Verfahren zur Herstellung eines Isolierprodukts (1) zum Isolieren einer Leitung, wobei das Verfahren aufweist:
- Anordnen von amorphem, isolierendem Füllmaterial (4) gegen wenigstens eine Schicht (2) eines an sich amorphen Materials (2); und
- Herstellen einer Reihe von umschließenden Kanälen (20; 40) in der wenigstens einen Schicht;
wobei all dieses derart erfolgt, dass das Füllmaterial von wenigstens einem umschließenden Kanal (10) der Reihe von umschließenden Kanälen umschlossen ist, und wobei das Füllmaterial, wenn es umschlossen ist, eine Form gemäß den Abmessungen des wenigstens einen umschließenden Kanals annimmt, um wenigstens ein Isolierrohr in der wenigstens einen Schicht zu erhalten; **dadurch gekennzeichnet, dass** das Anordnen des Füllmaterials (4) aufweist:
- Anordnen einer ersten Menge an Füllmaterial in wenigstens einem ersten umschließenden Kanal der Reihe von umschließenden Kanälen, wobei der wenigstens eine erste umschließende Kanal zu einer ersten Zone der Leitung gehört;
- Anordnen einer zweiten Menge an Füllmaterial in wenigstens einem zweiten umschließenden Kanal der Reihe von umschließenden Kanälen, wobei der wenigstens eine zweite umschließende Kanal zu einer zweiten Zone der Leitung gehört, wobei die zweite Zone an einer anderen Position als die erste Zone liegt;
wobei die erste Menge sich gemäß einer Differenz zwischen der Oberfläche jeweils der ersten Zone und der zweiten Zone von der zweiten Menge unterscheidet.

2. Verfahren nach Anspruch 1, wobei die wenigstens eine Schicht entweder die gleiche Schicht für eine Vielzahl von, bevorzugt alle, umschließenden Kanäle der Reihe von umschließenden Kanälen aufweist oder ein einzelnes Schichtstück für jeden umschließenden Kanal der Reihe von umschließenden Kanälen aufweist.

3. Verfahren nach einem der vorhergehenden Ansprüche, wobei der oder jeder umschließende Kanal der Reihe von umschließenden Kanälen entlang seiner Längsrichtung ein offenes Ende aufweist, und wobei das Verfahren das Schließen des offenen Endes des oder jedes umschließenden Kanals aufweist.

4. Verfahren nach einem der vorhergehenden Ansprüche, das aufweist:
- Schließen wenigstens eines oder bevorzugt beider Längsaußenenden des wenigstens einen umschließenden Kanals.

5. Verfahren nach einem der vorhergehenden Ansprüche,
wobei das Anordnen des Füllmaterials das Anordnen wenigstens eines Streifens von Füllmaterial höchstens über einen begrenzten Abschnitt der Länge des oder jedes entsprechenden umschließenden Kanals aufweist; und wobei das Verfahren überdies das Schließen der Grenzen des begrenzten Abschnitts aufweist.

6. Verfahren nach einem der Ansprüche 3 - 5, wobei das Schließen das Verbinden wechselseitig entgegengesetzter Wände (5) des relevanten umschließenden Kanals aufweist.

7. Verfahren nach einem der vorhergehenden Ansprüche, wobei das Füllmaterial zumindest während es angeordnet wird, in einem Massivzustand ist; und/oder wobei das Verfahren aufweist:
- Messen wenigstens einer Abmessung der Leitung, die isoliert werden soll; und
- auf der Basis der wenigstens einen gemessenen Abmessung Berechnen wenigstens einer Abmessung der Reihe von umschließenden Kanälen zur Herstellung; und
wobei das amorphe, isolierende Füllmaterial gemäß der wenigstens einen berechneten Abmessung gegen die wenigstens eine Schicht angeordnet wird; und
wobei die Reihe von umschließenden Kanälen gemäß der wenigstens einen berechneten Abmessung in der wenigstens einen Schicht hergestellt wird; und/oder wobei das Herstellen aufweist:
- Ausbilden einer ersten Unterreihe von umschließenden Kanälen und einer zweiten Unterreihe von umschließenden Kanälen mit einer dazu komplementären Form; und
- abwechselndes Ineinandergreifenlassen der ersten Unterreihe von umschließenden Kanälen und der zweiten Unterreihe von umschließenden Kanälen, um die Reihe von umschließenden Kanälen zu erhalten; und/oder
wobei das Füllmaterial einen Lamdawert von maximal 0,2 W/m-K, bevorzugt maximal 0,1 W/m·K, bevorzugter maximal 0,05 W/m·K, am bevorzugtesten maximal 0,025 W/m·K, hat; und/oder
wobei das Füllmaterial wenigstens eines der folgenden Materialien aufweist: Perlit, Aerogel; und weggeworfenes Isoliermaterial; und/oder wobei das Füllmaterial mittels Natriumsilikat zusammenhaltend gemacht wird; und/oder
wobei wenigstens die Seite der wenigstens einen Schicht, die von der Leitung, die isoliert werden soll, weg gewandt ist, aus einem Material hergestellt ist, so dass das Isolierprodukt in wenigstens einer der folgenden Klassen gemäß der europäischen Norm EN 13501-1 hergestellt wird: europäische Brandklasse B oder weniger brennbar; europäische Rauchklasse s1; und Europäische Klasse für brennendes Abtropfen d0; und/oder wobei das Verfahren aufweist:
- Befestigen einer Abdeckfolie (8) an einer Seite der wenigstens einen Schicht, so dass sie von der Leitung, die isoliert werden soll, weg gerichtet ist; und
wobei die Abdeckfolie (8) bevorzugt aus einem Material hergestellt ist, so dass das Isolierprodukt in wenigstens einer der folgenden Klassen gemäß der europäischen Norm EN 13501-1 hergestellt wird: europäische Brandklasse B oder weniger brennbar; europäische Rauchklasse s1; und Europäische Klasse für brennendes Abtropfen d0; und/oder wobei die Abdeckfolie mittels wenigstens eines der folgenden Verfahren an der Seite der Reihe von umschließenden Kanälen befestigt wird, so dass sie von dem Kanal, der isoliert werden soll, weg gerichtet ist: Kleben; Heißschweißen, Heften und/oder Klammern; und/oder wobei die Abdeckfolie aus einem Material hergestellt wird, das aus den Folgenden ausgewählt wird: Mineralwolle, Basalfasergewebe; faserverstärktes Aluminium; und Basaltvlies; und/oder wobei das amorphe Material ein thermoplastisches Material ist; und/oder wobei das amorphe Material ein Polymermaterial, bevorzugt Polypropylen, ist; und/oder wobei das Verfahren aufweist:
- Verhindern der Anordnung von Füllmaterial in wenigstens einem umschließenden Kanal der ausgebildeten Reihe von umschließenden Kanälen, wobei wenigstens ein umschließender Kanal als Indikatorkanal geeignet ist, um anzuzeigen, wo das Isolierprodukt geschnitten werden kann.

8. Verfahren zum Isolieren einer Leitung, das aufweist:
- Herstellen wenigstens eines Isolierprodukts nach dem Verfahren nach einem der vorhergehenden Ansprüche; und
- Anordnen des wenigstens einen Isolierprodukts auf der Leitung.

9. Verfahren nach Anspruch 8, das aufweist:
- Befestigen des angeordneten wenigstens einen Isolierprodukts, indem es wenigstens einmal um eine Außenwand der Leitung, die isoliert werden soll, gewickelt wird und indem sein Wickelsaum bevorzugt entlang seiner Längsrichtung, geschlossen wird.

10. Isolierprodukt (1) zum Isolieren einer Leitung, wobei das Isolierprodukt aufweist:
wenigstens eine Schicht (2) eines an sich amorphen Materials, wobei in der wenigstens einen Schicht eine Reihe von umschließenden Kanälen (20; 40) hergestellt ist, wobei ein amorphes, isolierendes Füllmaterial (4) in wenigstens einem umschließenden Kanal der Reihe von umschließenden Kanälen in einer Weise umschlossen ist, dass das umschlossene Füllmaterial eine Form gemäß den Abmessungen des wenigstens einen umschließenden Kanals angenommen hat, so dass wenigstens ein Isolierrohr in der wenigstens einen Schicht ausgebildet ist;
**dadurch gekennzeichnet, dass** die Reihe von umschließenden Kanälen wenigstens einen ersten umschließenden Kanal, der zu einer ersten Zone der Leitung gehört, aufweist, wobei in dem wenigstens einen ersten umschließenden Kanal eine erste Menge an Füllmaterial angeordnet ist;
wobei die Reihe von umschließenden Kanälen wenigstens einen zweiten umschließenden Kanal, der zu einer zweiten Zone der Leitung gehört, aufweist, wobei die zweite Zone in anderen Position als die erste Zone liegt, wobei in dem wenigstens einen zweiten umschließenden Kanal eine zweite Menge an Füllmaterial angeordnet ist;
wobei die erste Menge sich gemäß einer Differenz zwischen der Oberfläche jeweils der ersten Zone und der zweiten Zone von der zweiten Menge unterscheidet.

11. Isolierprodukt nach Anspruch 10, wobei die wenigstens eine Schicht entweder die gleiche Schicht für eine Vielzahl von, bevorzugt alle, umschließenden Kanäle der Reihe von umschließenden Kanälen aufweist oder ein einzelnes Schichtstück für jeden umschließenden Kanal der Reihe von umschließenden Kanälen aufweist.

12. Isolierprodukt nach einem der Ansprüche 10 - 11, wobei der oder jeder umschließende Kanal der Reihe von umschließenden Kanälen entlang seiner Längsrichtung ein schließbares offenes Ende aufweist.

13. Isolierprodukt nach einem der Ansprüche 10 - 12, wobei wenigstens ein oder bevorzugt beide Längsaußenenden des wenigstens einen umschließenden Kanals geschlossen sind.

14. Isolierprodukt nach einem der Ansprüche 10 - 13,
wobei der wenigstens eine umschließende Kanal wenigstens einen umschließenden Kanal hat, in dem Füllmaterial höchstens über einen begrenzten Abschnitt seiner Länge umschlossen ist, und wobei die Grenzen des begrenzten Abschnitts geschlossen sind.

15. Isolierprodukt nach einem der Ansprüche 10 - 14, wobei wechselseitig entgegengesetzte Wände des relevanten umschließenden Kanals verbunden sind; und/oder
wobei das Füllmaterial in einem Massivzustand ist; und/oder
wobei die Reihe von umschließenden Kanälen eine erste Unterreihe von umschließenden Kanälen und eine zweite Unterreihe von umschließenden Kanälen mit einer dazu komplementären Form aufweist, wobei die erste und die zweite Unterreihe von umschließenden Kanälen abwechselnd ineinandergreifen; und/oder
wobei das Füllmaterial einen Lamdawert von maximal 0,2 W/m·K, bevorzugt maximal 0,1 W/m·K, bevorzugter maximal 0,05 W/m·K, am bevorzugtesten maximal 0,025 W/m·K, hat; und/oder
wobei das Füllmaterial wenigstens eines der folgenden Materialien aufweist: Perlit, Aerogel; und weggeworfenes Isoliermaterial; und/oder
wobei das Füllmaterial mittels Natriumsilikat zusammenhaltend gemacht wird, und/oder wobei wenigstens die Seite der wenigstens einen Schicht, die von der Leitung, die isoliert werden soll, weg gewandt ist, aus einem Material hergestellt ist, so dass das Isolierprodukt in wenigstens einer der folgenden Klassen gemäß der europäischen Norm EN 13501-1 hergestellt ist: europäische Brandklasse B oder weniger brennbar; europäische Rauchklasse s1; und Europäische Klasse für brennendes Abtropfen d0; und/oder
wobei das Isolierprodukt aufweist: eine Abdeckfolie (8), die an einer Seite der wenigstens einen Schicht, befestigt ist, so dass sie von der Leitung, die isoliert werden soll, weg gerichtet ist; wobei die Abdeckfolie bevorzugt aus einem Material hergestellt ist, so dass das Isolierprodukt in wenigstens einer der folgenden Klassen gemäß der europäischen Norm EN 13501-1 hergestellt ist: europäische Brandklasse B oder weniger brennbar; europäische Rauchklasse s1; und Europäische Klasse für brennendes Abtropfen d0; und/oder
wobei die Abdeckfolie mittels wenigstens eines der folgenden Verfahren an der Seite der Reihe von umschließenden Kanälen befestigt wird, so dass sie von dem Kanal, der isoliert werden soll, weg gerichtet ist: Kleben; Heißschweißen, Heften und/oder Klammern; und/oder wobei die Abdeckfolie aus einem Material hergestellt ist, das aus den Folgenden ausgewählt wird: Mineralwolle, Basalfasergewebe; faserverstärktes Aluminium; und Basaltvlies; und/oder wobei das amorphe Material ein thermoplastisches Material ist; und/oder
wobei das amorphe Material ein Polymermaterial, bevorzugt Polypropylen, ist; und/oder wobei die Reihe von umschließenden Kanälen wenigstens einen Indikatorkanal aufweist, in dem im Wesentlichen kein Füllmaterial umschlossen ist.

16. Anordnung aus wenigstens einem Isolierprodukt nach einem der Ansprüche 10 - 15 und einer Leitung, die isoliert werden soll, wobei das oder jedes Isolierprodukt auf der Leitung, die isoliert werden soll, angeordnet ist; wobei das oder jedes angeordnete Isolierprodukt bevorzugt wenigstens einmal um eine Außenwand der Leitung, die isoliert werden soll, gewickelt ist, und wobei sein Wickelsaum bevorzugt entlang seiner Längsrichtung, geschlossen ist.

## Revendications

1. Procédé de fabrication d'un produit isolant (1) destiné à isoler un conduit, ledit procédé comprend :
l'agencement d'un matériau de charge isolant et amorphe (4) contre au moins un film (2) d'un matériau intrinsèquement amorphe (2) ; et
la fabrication d'une rangée de canaux d'enveloppe (20 ; 40) sur le au moins un film ;
cela de telle sorte que le matériau de charge soit enveloppé dans au moins un canal d'enveloppe (10) de la rangée de canaux d'enveloppe et, lorsqu'il est enveloppé, le matériau de charge prend une forme en fonction des dimensions du au moins un canal d'enveloppe dans le but d'obtenir au moins un tube isolant sur le au moins un film ; **caractérisé en ce que** l'agencement du matériau de charge (4) comprend :
l'agencement d'une première quantité de matériau de charge dans au moins un premier canal d'enveloppe de la rangée de canaux d'enveloppe, lequel au moins un premier canal d'enveloppe est associé à une première zone du conduit ;
l'agencement d'une seconde quantité de matériau de charge sur au moins un second canal d'enveloppe de la rangée de canaux d'enveloppe, lequel au moins un second canal d'enveloppe est associé à une seconde zone du conduit, laquelle seconde zone est située à une position différente de la première zone ;
dans lequel la première quantité diffère de la seconde quantité respectivement en fonction d'une différence entre la surface efficace de la première zone et de la seconde zone.

2. Procédé selon la revendication 1, dans lequel le au moins un film comprend soit le même film pour une pluralité de canaux d'enveloppe de la rangée de canaux d'enveloppe, de préférence, pour la totalité de ces derniers, soit il comprend un morceau de film individuel pour chaque canal d'enveloppe de la rangée de canaux d'enveloppe.

3. Procédé selon l'une quelconque des revendications précédentes, dans lequel le ou chaque canal d'enveloppe de la rangée de canaux d'enveloppe comprend, dans sa direction longitudinale, une extrémité ouverte, et dans lequel le procédé comprend l'obturation de l'extrémité ouverte du ou de chaque canal d'enveloppe.

4. Procédé selon l'une quelconque des revendications précédentes, comprenant :
l'obturation d'au moins une et, de préférence, des deux extrémités longitudinales externes du au moins un canal d'enveloppe.

5. Procédé selon l'une quelconque des revendications précédentes,
dans lequel l'agencement du matériau de charge comprend l'agencement d'au moins une bande de matériau de charge sur au moins une partie délimitée de la longueur du ou de chaque canal d'enveloppe correspondant ; et
dans lequel le procédé comprend, en outre, l'obturation des limites de la partie délimitée.

6. Procédé selon l'une quelconque des revendications 3 à 5, dans lequel l'obturation comprend la jonction de parois (5) mutuellement opposées du canal d'enveloppe approprié.

7. Procédé selon l'une quelconque des revendications précédentes, dans lequel le matériau de charge est dans état brut, au moins lorsqu'il agencé ; et/ou
dans lequel le procédé comprend :
la mesure d'au moins une dimension du conduit à isoler ; et
le calcul sur la base de la au moins une dimension mesurée d'au moins une dimension de la rangée de canaux d'enveloppe à fabriquer ; et
dans lequel le matériau de charge isolant et amorphe est agencé contre le au moins un film en fonction de la au moins une dimension calculée ; et
dans lequel la rangée de canaux d'enveloppe est fabriquée sur au moins un film en fonction de la au moins une dimension calculée ; et/ou
dans lequel la fabrication comprend :
la formation d'une première rangée secondaire de canaux d'enveloppe et d'une seconde rangée secondaire de canaux d'enveloppe avec une forme complémentaire à cette dernière ; et
le couplage de la première rangée secondaire de canaux d'enveloppe et de la seconde rangée secondaire de canaux d'enveloppe l'une à l'autre de manière alternée dans le but d'obtenir la rangée de canaux d'enveloppe ; et/ou
dans lequel le matériau de charge présente une valeur lambda avec un maximum de 0,2 W/m.K, de préférence, un maximum de 0,1 W/m.K, plus préférablement, un maximum de 0,05 W/m.K, encore plus préférablement, un maximum de 0,025 W/m.K ; et/ou
dans lequel le matériau de charge comprend au moins l'un des matériaux suivants : la perlite ; un aérogel ; et des matériaux isolants recyclés ; et/ou dans lequel le matériau de charge est rendu cohésif au moyen de silicate de sodium, et/ou
dans lequel le au moins un côté du au moins un film à orienter à l'opposé du conduit à isoler est fabriqué en un matériau tel que le produit isolant est fabriqué selon au moins l'une des classes suivantes selon la norme européenne EN 13501-1 : la classe européenne de résistance au feu B ou moins combustible ; la classe européenne d'opacité des fumées s1 ; et la classe européenne de formation de gouttelettes enflammées d0 ; et/ou dans lequel le procédé comprend :
la fixation d'une feuille de revêtement (8) sur un côté du au moins un film à orienter à l'opposé du conduit à isoler ; et
dans lequel la feuille de revêtement (8) est, de préférence, fabriquée en un matériau tel que le produit isolant est fabriqué selon au moins l'une des classes suivantes selon la norme européenne EN 13501-1 : la classe européenne de résistance au feu B ou moins combustible ; la classe européenne d'opacité des fumées s1 ; et la classe européenne de formation de gouttelettes enflammées d0 ; et/ou
dans lequel la feuille de revêtement est fixée sur le côté de la rangée de canaux d'enveloppe destinée à être orientée à l'opposé du conduit à isoler au moyen d'au moins l'un des procédés suivants : le collage, le soudage à chaud, la couture et/ou l'agrafage ; et/ou
dans lequel la feuille de revêtement est fabriquée en un matériau sélectionné à partir des suivants : de la laine minérale ; un tissu de fibre de basalte ; de l'aluminium renforcé par fibre ; et du basalte non tissé ; et/ou
dans lequel le matériau amorphe est un matériau thermoplastique ; et/ou
dans lequel le matériau amorphe est un matériau polymère, de préférence, un polypropylène ; et/ou
dans lequel le procédé comprend :
la prévention de l'agencement de matériau de charge sur au moins un canal d'enveloppe de la rangée de canaux d'enveloppe formée, lequel au moins un canal d'enveloppe est approprié en tant que canal indicateur afin d'indiquer l'emplacement auquel le produit isolant peut être coupé.

8. Procédé d'isolation d'un conduit, comprenant :
la fabrication d'au moins un produit isolant suivant le procédé selon l'une quelconque des revendications précédentes ; et
l'agencement du au moins un produit isolant fabriqué sur le conduit.

9. Procédé selon la revendication 8, comprenant :
la fixation du au moins un produit isolant agencé en l'enroulant au moins une fois autour d'une paroi externe du conduit à isoler et en obturant son joint d'enroulement, de préférence, suivant sa direction longitudinale.

10. Produit isolant (1) destiné à isoler un conduit, dans lequel le produit isolant comprend au moins un film (2) en un matériau intrinsèquement amorphe, dans lequel au moins un film d'une rangée de canaux d'enveloppe (20 ; 40) est fabriqué, dans lequel un matériau de charge isolant et amorphe (4) est enveloppé dans au moins un canal d'enveloppe de la rangée de canaux d'enveloppe d'une manière telle que le matériau de charge enveloppé prend une forme en fonction des dimensions du au moins un canal d'enveloppe, de telle sorte qu'au moins un tube isolant est formé dans le au moins un film ;
**caractérisé en ce que** la rangée de canaux d'enveloppe comprend au moins un premier canal d'enveloppe qui est associé à une première zone du conduit, à l'intérieur duquel au moins un premier canal d'enveloppe, une première quantité de matériau de charge est agencée ;
dans lequel la rangée de canaux d'enveloppe comprend au moins un second canal d'enveloppe qui est associé à une seconde zone du conduit, laquelle seconde zone est située à une position différente de la première zone, à l'intérieur duquel au moins un second canal d'enveloppe, une seconde quantité de matériau de charge est agencée ;
dans lequel la première quantité diffère de la seconde quantité en fonction d'une différence entre les surfaces efficaces respectives de la première zone et de la seconde zone.

11. Produit isolant selon la revendication 10, dans lequel le au moins un film comprend soit le même film pour une pluralité de canaux d'enveloppe de la rangée de canaux d'enveloppe, de préférence, pour la totalité de ces derniers, soit il comprend un morceau de film individuel pour chaque canal d'enveloppe de la rangée de canaux d'enveloppe.

12. Produit isolant selon l'une quelconque des revendications 10 à 11, dans lequel le ou chaque canal d'enveloppe de la rangée de canaux d'enveloppe comprend suivant sa direction longitudinale, une extrémité ouverte pouvant être obturée.

13. Produit isolant selon l'une quelconque des revendications 10 à 12, dans lequel au moins l'une et, de préférence, les deux extrémités longitudinales externes du au moins un canal d'enveloppe sont obturées.

14. Produit isolant selon l'une quelconque des revendications 10 à 13, dans lequel le au moins un canal d'enveloppe présente au moins un canal d'enveloppe dans lequel du matériau de charge est enveloppé sur au plus une partie délimitée de sa longueur, et dans lequel les limites de la partie délimitée sont obturées.

15. Produit isolant selon l'une quelconque des revendications 10 à 14, dans lequel des parois mutuellement opposées du canal d'enveloppe approprié sont reliées ; et/ou
dans lequel le matériau de charge est dans un état brut ; et/ou
dans lequel la rangée de canaux d'enveloppe comprend une première rangée secondaire de canaux d'enveloppe et une seconde rangée secondaire de canaux d'enveloppe avec une forme complémentaire à cette dernière, dans lequel la première et la seconde rangées secondaires de canaux d'enveloppe sont couplées l'une à l'autre de manière alternée ; et/ou
dans lequel le matériau de charge présente une valeur lambda avec un maximum de 0,2 W/m.K, de préférence, un maximum de 0,1 W/m.K, plus préférablement, un maximum de 0,05 W/m.K, encore plus préférablement, un maximum de 0,025 W/m.K ; et/ou
dans lequel le matériau de charge comprend au moins l'un des matériaux suivants : la perlite ; un aérogel ; et des matériaux isolants recyclés ; et/ou
dans lequel le matériau de charge est rendu cohésif au moyen de silicate de sodium, et/ou dans lequel au moins le côté du au moins un film à orienter à l'opposé du conduit à isoler est fabriqué en un matériau tel que le produit isolant est fabriqué selon au moins l'une des classes suivantes selon la norme européenne EN 13501-1 : la classe européenne de résistance au feu B ou moins combustible ; la classe européenne d'opacité des fumées s1 ; et la classe européenne de formation de gouttelettes enflammées d0 ; et/ou
dans lequel le produit isolant comprend une feuille de revêtement (8) fixée sur un côté du au moins un film à orienter à l'opposé du conduit à isoler ; dans lequel la feuille de revêtement est, de préférence, fabriquée en un matériau tel que le produit isolant est fabriqué selon au moins l'une des classes suivantes selon la norme européenne EN 13501-1 : la classe européenne de résistance au feu B ou moins combustible ; la classe européenne d'opacité des fumées s1 ; et la classe européenne de formation de gouttelettes enflammées d0 ; et/ou
dans lequel la feuille de revêtement est fixée sur le côté de la rangée de canaux d'enveloppe destinée à être orientée à l'opposé du conduit à isoler au moyen d'au moins l'un des procédés suivants : le collage, le soudage à chaud, la couture et/ou l'agrafage ; et/ou
dans lequel la feuille de revêtement est fabriquée en un matériau sélectionné à partir des suivants : de la laine minérale ; un tissu de fibre de basalte ; de l'aluminium renforcé par fibre ; et du basalte non tissé ; et/ou
dans lequel le matériau amorphe est un matériau thermoplastique ; et/ou
dans lequel le matériau amorphe est un matériau polymère, de préférence, un polypropylène ; et/ou
dans lequel la rangée de canaux d'enveloppe comprend au moins un canal indicateur dans lequel sensiblement aucun matériau de charge n'est présent.

16. Ensemble d'au moins un produit isolant selon l'une quelconque des revendications 10 à 15 et d'un conduit à isoler, dans lequel le ou chaque produit isolant est agencé sur le conduit à isoler ; dans lequel, de préférence, le ou chaque produit isolant agencé est enroulé au moins une fois autour d'une paroi externe du conduit à isoler, et dans lequel son joint d'enroulement est, de préférence, fermé suivant sa direction longitudinale.
